# EUROPEAN PATENT SPECIFICATION

(11) **EP 3 654 642 B1**
(45) Date of publication and mention of the grant of the patent: **18.10.2023**
(21) Application number: 19182999.3
(22) Date of filing: 27.06.2019
(51) Int. Cl.: H04N 9/31

(54) **PROJECTION DISPLAY APPARATUS AND METHOD FOR CONTROLLING THE SAME**
PROJEKTIONSANZEIGEVORRICHTUNG UND VERFAHREN ZUR STEUERUNG DAVON
APPAREIL D'AFFICHAGE PAR PROJECTION ET SON PROCÉDÉ DE COMMANDE

(30) Priority: 19.11.2018 CN 201811375974
(43) Date of publication of application: 20.05.2020
(73) Proprietor: Delta Electronics, Inc., Taoyuan City 333 (TW)
(72) Inventor: YANG, Chung-Yi, 333 Taoyuan City (TW)
(74) Representative: Porta & Consulenti Associati S.p.A.

(56) References cited:
- CN-A- 108 696 732
- US-A1- 2014 285 483
- US-A1- 2014 293 247

## Description

### BACKGROUND

### Field of Invention

The present invention relates to a projection display apparatus and a method for controlling the same. More particularly, the present invention relates to a projection display apparatus with multiple display modes and a method for controlling the same.

### DESCRIPTION OF RELATED ART

With the advancement of the display apparatus industry, display requirements for large-scale applications often require the highest display resolution, such as 4K (3840x2160) or even 8K (7680x4320) projection display requirements. In addition to the display resolution, the frame rate of the video also affects the quality of motion picture. In order to increase the smoothness of motion picture, a common method is to perform motion estimation and insert processed frames on the original input video signal. Depending on the needs of the actual application, higher resolution is more important for some applications, while higher frame rates is more important for other applications. However, high resolution and high frame rates are often not able to be both achieved due to bandwidth constraints. Further, an ordinary user may not understand the effects of resolution and frame rate to their specific application/use. Therefore, it is desirable to have a more intelligent and automated high-end projector system which can select and tune its operating resolution and frame rate to achieve higher results.
US 2014/293247 A1 relates to a projection display apparatus that includes an optical system configured to project an image, an optical path changing unit configured to change an optical path of the image to change projected positions, on a projection plane, of pixels composing the image, a driver configured to shift the optical path changing unit, and a drive controller configured to control the driver.
US 2014/285483 A1 relates to an image processing apparatus that includes a memory unit that stores an input image and read the input image as first image second images, an acquiring unit that acquires an up-conversion line that is a line of pixels used for up conversion from the first and second images, an up-converting unit that performs up conversion using pixels of the up-conversion line, and generate first and second up-converted images obtained by up converting the first and second images, and a generating unit that writes the first and second up-converted images in first and second memory blocks, reads pixels of the first and second up-converted images written in the first and second memory blocks in a certain order decided according to a scan method of a display device configured to display an output image obtained by up converting the input image, and generates the output image according to the scan method.
CN 108 696 732 A concerns a method for a head-mounted display equipment. The method includes determining significance information of display contents in multimedia information; adjusting the resolution of the multimedia information corresponding to each display content according to the significance information; and displaying the multimedia information after the resolution is adjusted.

### SUMMARY

One aspect of the present invention is a projection display apparatus according to claim 1.

Another aspect of the present invention is a control method according to claim 6.

### BRIEF DESCRIPTION OF THE DRAWINGS

Fig. 1 is a function block diagram of a projection display apparatus according to an embodiment of the present invention.
Fig. 2 is a system setting representation of a projection display apparatus according to an embodiment of the present invention.
Fig. 3 is a partial circuit diagram of a projection display apparatus according to an embodiment of the present invention.
Fig. 4 is a schematic diagram of a converting method of an input video signal according to an embodiment of the present invention.
Fig. 5 is a schematic diagram of a shifting method of a video image according to an embodiment of the present invention.
Fig. 6 is a flow chart of a control method according to an embodiment of the present invention.
Fig. 7 is a flow chart of further steps included in step S220 in the control method of Fig. 6 according to some embodiments within the invention.
Fig. 8 is a flow chart of further steps included in step S220 in the control method of Fig. 6 according to some embodiments within the invention.
Fig. 9 is a flow chart of further steps included in step S220 in the control method of Fig. 6 according to some embodiments within the invention.
Fig. 10 is a flow chart of further steps included in step S220 in the control method of Fig. 6 according to some embodiments within the invention.
Fig. 11 is a flow chart of further steps included in step S220 in the control method of Fig. 6 according to some embodiments within the invention.
Fig. 12 is a flow chart of further steps included in step S220 in the control method of Fig. 6 according to some embodiments within the invention.

### DETAILED DESCRIPTION

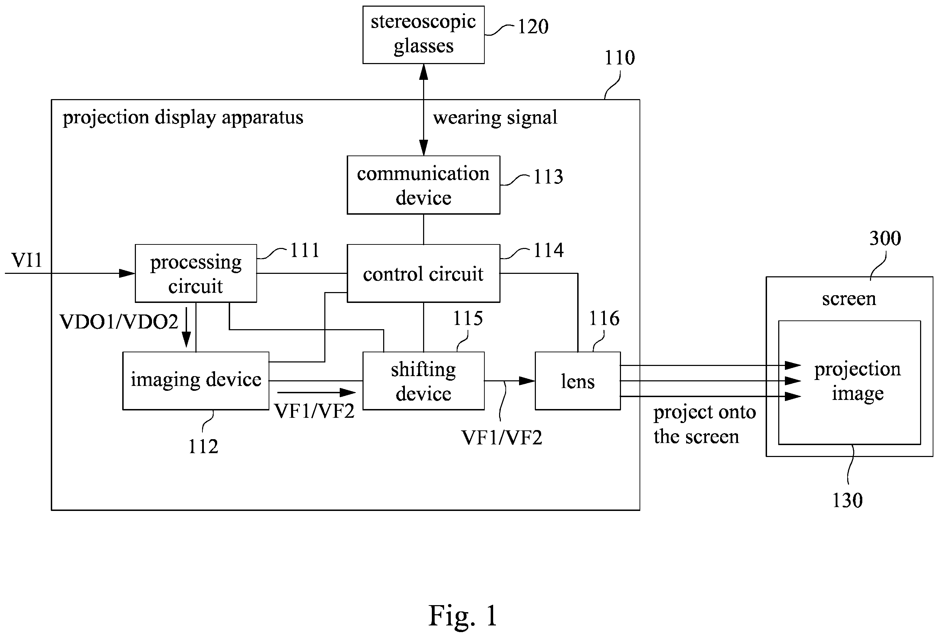

Referring to Fig. 1, a projection display apparatus 110 is shown which includes a processing circuit 111, an imaging device 112, a communication device 113, a control circuit 114, a shifting device 115, and a lens 116. The processing circuit 111 is electrically coupled to the imaging device 112, the control circuit 114 and the shifting device 115. The control circuit 114 is electrically coupled to the processing circuit 111, the imaging device 112, the communication device 113, the shifting device 115 and the lens 116. The processing circuit 111 may be a processor such as a scaler, an image processor or FPGA. The communication device 113 may be a component of various protocol interfaces (wired or wireless), a wireless communication chip, and/or other component with communication function for receiving a wearing signal of a stereoscopic glasses 120 and transmitting the stereoscopic left/right eye synchronization signals to the stereoscopic glasses 120. The control circuit 114 may be a central processor or a microprocessor. The implementation and connection of the devices and components in the projection display apparatus 110 are not limited to the above described, and any connection method and implementation method suitable for the projection display apparatus 110 to implement the following technical contents can be applied to the present case.

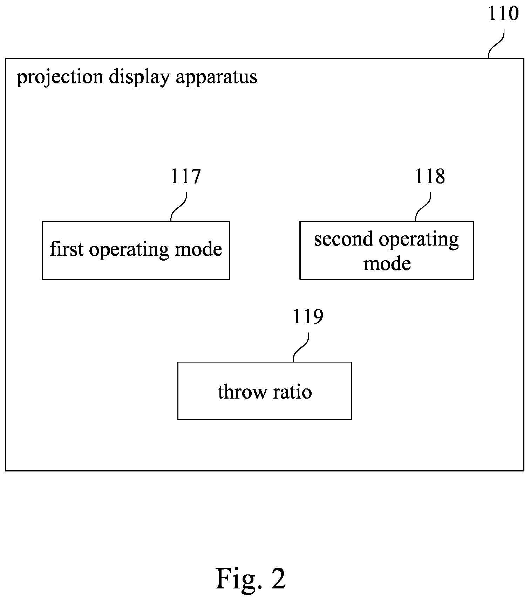

Referring to Fig. 1 and Fig. 2, a projection display apparatus 110 is shown which includes a first operating mode 117 and a second operating mode 118. The operating modes may be set to a high resolution mode or a high frame rate mode. The projection display apparatus 110 further includes a throw ratio 119, which is generally defined as the projection distance divided by the width of the projected image for representing the length of the focal length of the projection lens, and the throw ratio can be manually set or automatically detected. The focal length of the projection lens can be changed by changing the lens, or be adjustable such as by manually adjusting the lens or electrically adjusting by the projection display apparatus 110 (e.g., controlled by the control circuit 114). When the focal length of the projection lens has been changed, the throw ratio 119 of the projection display apparatus 110 can be correspondingly updated.

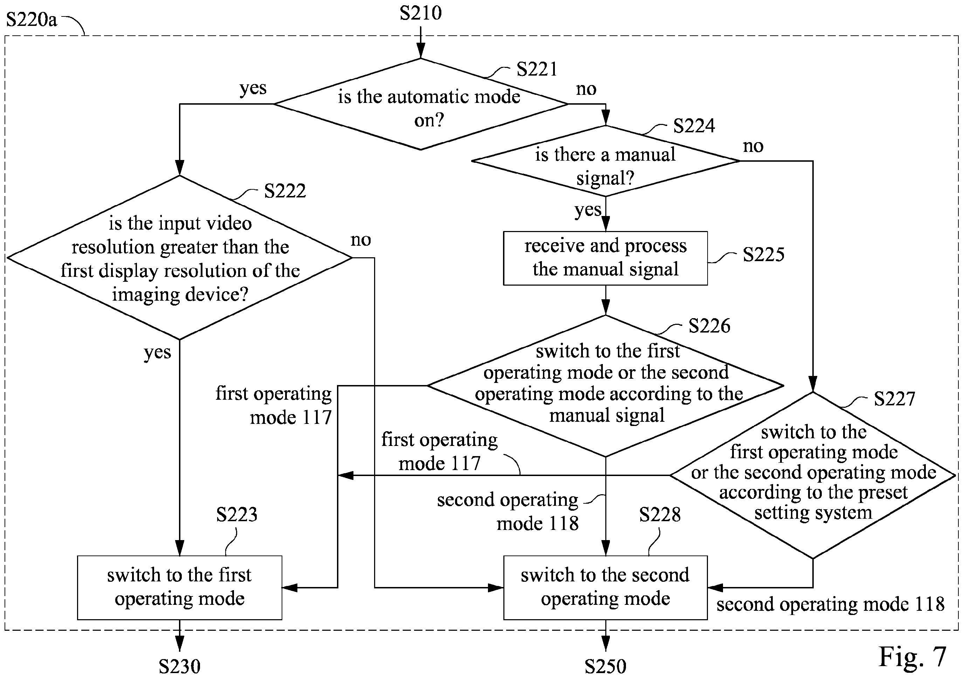

In an embodiment, the processing circuit 111 receives an input video signal VI1, and the input video signal VI1 includes an input video feature. The input video feature may include examples such as input video clocking and display timing information, input video resolution, input video format (e.g., stereoscopic image format) or compression indicator such as if it is in a compressed format, etc. In some embodiments, the control circuit 114 selectively switches the projection display apparatus 110 to the first operating mode 117 or the second operating mode 118 according to the input video feature or an operating condition of the projection display apparatus 110. In one configuration not being part of the present invention, the control circuit 114 selectively switches the projection display apparatus 110 to the first operating mode 117 or the second operating mode 118 according to a priority order set by the projection display apparatus 110 (e.g., shown in Fig. 7 to Fig. 12). The projection display apparatus 110 determine whether to switch to the first operating mode 117 or the second operating mode 118 according to the input video feature, or according to the operating condition, or according to the priority order set by the projection display apparatus 110. A more detailed determination and selection process is described later.

In an embodiment, the imaging device 112 may have a native resolution of 3840×2160, which is also referred to as 4K resolution. In some applications, the input video signal VI1 provides an image resolution greater than the native resolution of the imaging device 112. For example, the input video signal VI1 may provide an input image of 8K (7680x4320) resolution. In general, when the resolution of the input image is greater than the native resolution of the imaging device, the projection display apparatus can only exhibit effect to the level of the native resolution. In an embodiment of the present invention, the projection display apparatus 110 switches to a particular operating mode according to the feature of the input video signal VI1 (e.g., resolution of the input video signal).

For example, when the projection display apparatus 110 is switched to the first operating mode 117, the processing circuit 111 converts the input video signal VI1 to a first driving output video signal VDO1 which is input into the imaging device 112. The imaging device 112 has a first display resolution (e.g., 4K, 3840x2160), and the imaging device 112 receives the first drive output video signal VDO1 and images the first output video image VF1 to the shifting device 115. The shifting device 115 cooperates with the imaging device 112 to cause a projection image 130, having a second display resolution (e.g., 8K, 7680x4320) that is greater than the first display resolution (e.g., aforementioned 4K), to be projected onto a screen 300. By this way, the projection display apparatus 110 with a lower native resolution can be operated to present a higher-resolution-equivalent output image. A more detailed process is described later.

In some applications, the resolution of the input image is be greater than the native resolution of the projection display apparatus 110. In this circumstance, it is not necessary to increase the display resolution of the projection display apparatus 110 to display the input image resolution. Also, in some applications, displaying a higher resolution image does not enhance the viewing experience, and therefore it is not desirable to increase the display resolution of the projection display apparatus 110. For example, in an embodiment of the present disclosure, the projection display apparatus 110 can determine to select a particular operating mode better suited for 3D viewing according to the feature of the input video signal VI1 (e.g., if the input video signal has a stereoscopic format).

The projection display apparatus 110 can switch to the second operating mode 118, wherein the processing circuit 111 converts the input video signal VI1 to a second driving output video signal VDO2. The imaging device 112 receives the second driving output video signal VDO2 and images the second output video image VF2 to the shifting device 115. The shifting device 115 does not engage, and the second output video image VF2 is directly projected onto the screen 300 via the lens 116.

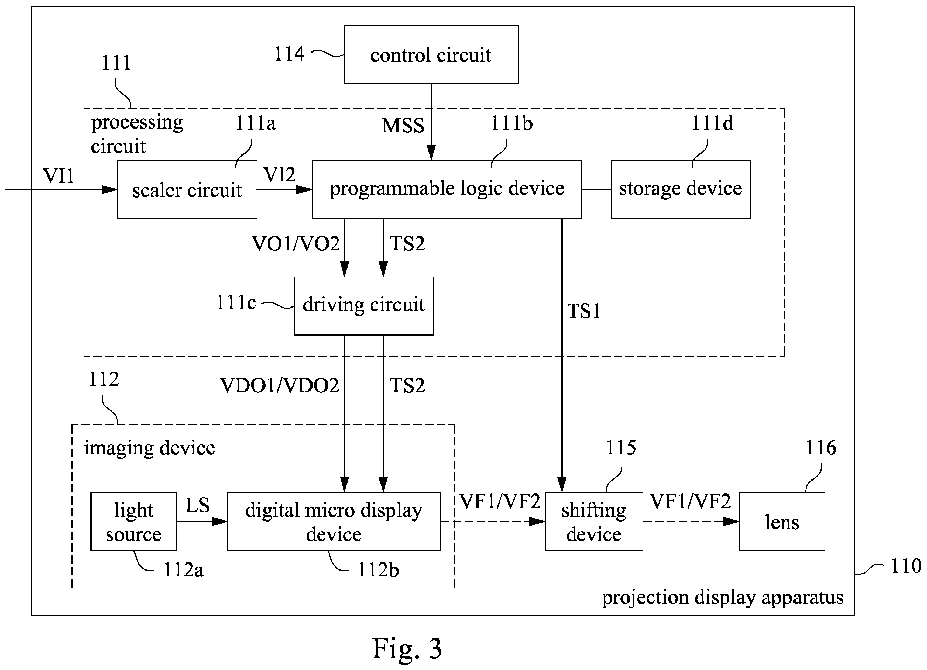

Referring to Fig. 3, a projection display apparatus 110 is shown which includes a processing circuit 111, a control circuit 114, an imaging device 112, a shifting device 115 and lens 116. The processing circuit 111 includes a scaler circuit 111 a, a programmable logic device 111 b, a driving circuit 111c and a storage device 111d. The imaging device 112 includes a light source 112a and a digital micro display device 112b. The scaler circuit 111a adjusts the input image specifications to the image specifications of the projection display apparatus 110. For example, the scaler circuit 111a can adjust a 4:3 or 16:10 projection aspect ratio input signal to a 16:9 projection aspect ratio of the projection display apparatus 110. The scaler circuit 111a adjusts the input video signal VI1 to generate an input video signal VI2.

According to an input video feature of the input video signal VI2 or an operating conditions of the projection display apparatus 110, the control circuit 114 transmits a mode switching signal MSS to the programmable logic device 111b. The mode switching signal MSS can be a signal indicating the selection of, and setting the projection display apparatus 110 to, the first operating mode 117. After receiving the mode switching signal MSS, the programmable logic device 111b converts the input video signal VI2 and outputs the first output video signal VO1, a clock signal TS1 and another clock signal TS2. The programmable logic device 111b transmits the clock signal TS1 to the shifting device 115 and also transmits the clock signal TS2, which is another synchronized clock signal, to the imaging device 112 via the driving circuit 111c.

The driving circuit 111c converts the first output video signal VO1 to a first driving output video signal VDO1 and outputs it to the digital micro display device 112b. In this embodiment, the first output video signal VO1 sent by the programmable logic device 111b to the driving circuit 111c may include image data such as color, brightness, and the like, of a plurality of pixels in each frame of a video stream (e.g., jpeg, bmp, gif, tiff or other picture or image storage format). The driving circuit 111c converts the first output video signal VO1 to a control signal format required by the digital micro display device 112b. In practical applications, the digital micro display device 112b includes a mirror matrix composed of a plurality of reflective mirrors, each of which can rotate at a very high speed, and the angle of rotation has two states, respectively representing the instantaneous brightness of each pixel in the picture. The ratio of bright time and dark time determines the brightness of each pixel in the picture. The driving output video signal VDO1 converted by the driving circuit 111c can be used to control the state and timing of rotation of the mirror. For example, if the ratio of bright time and dark time of the rotation state of one pixel is 50%-50%, the screen will be 50% brightness. That is, the first driving output video signal VDO1 processed by the driving circuit 111c can be used to drive the timing of the mirror matrix in the digital micro display device 112b to a desired rotation state. The digital micro display device 112b projects a display image to a projection optical path by the light LS emitted by a light source 112a and other optical components (not shown), and the display image on the digital micro display device 112b is projected onto the screen 300 via the shifting device 115 and the lens 116.

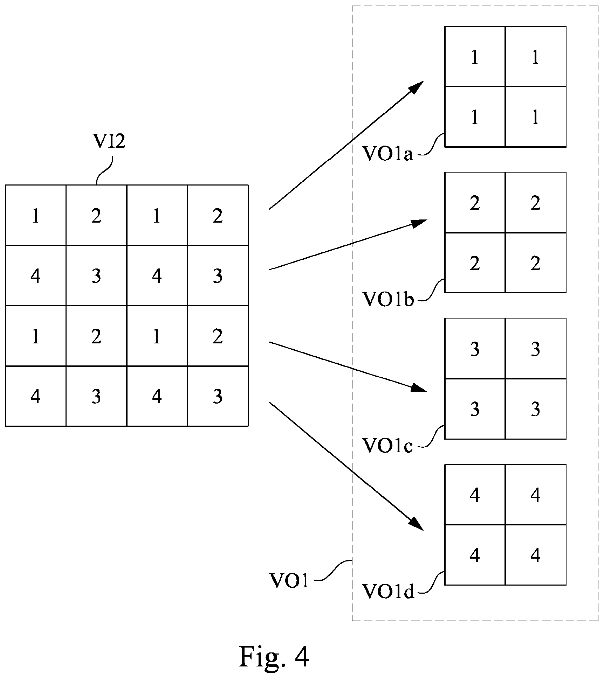

Referring to Fig. 4, in the first operating mode 117, the programmable logic device 111b converts the input video signal VI2 into a first output video signal VO1, and the first output video signal VO1 includes a first sub-image VO1 a, a second sub-image VO1b, and a third sub-image VO1c and a fourth sub-image VO1d. Using a 4x4 example, Fig. 4 shows an exemplary conversion method in which the 16 pixel points of the input video signal VI2 are equally divided into four pixel regions such as an upper left pixel region, an upper right pixel region, a lower left pixel region and a lower right pixel region. The four pixel points of each pixel region are divided into four pixel blocks such as an upper left pixel block, an upper right pixel block, a lower left pixel block, and a lower right pixel block. The pixels of the same pixel block in the four pixel regions combine into a new sub-picture. In this embodiment, for convenience of description, the pixel points of the same pixel block are denoted by the same number, and the four pixel points of the first sub-image VO1a is composed of the upper left pixel block of the four areas of the first output video signal VO1 (numbered as 1); the second sub-image VO1b is composed of the upper right pixel block (numbered as 2); the third sub-image VO1c is composed of the lower right pixel block (numbered as 3); and the fourth sub-image VO1d is composed of the lower left pixel block (numbered as 4).

Using the abovementioned technology, the projection display apparatus 110 realizes an image whose output resolution is greater than the native resolution of the projection device, by cooperation of the digital micro display component 112b and the shifting device 115.

The programmable logic device 111b may be a field programmable gate array (FPGA), a programmable array logic (PAL), a generic array logic (GAL), or a complex programmable logic device (CPLD), or any other equivalent programmable logic devices. The digital micro display device 112b may include a matrix of a plurality of micro mirrors and using a micro switch for adjusting the micro mirrors.

The shifting device 115 is set up to operate cooperatively with the digital micro display device 112b. In an embodiment, the shifting device 115 includes the mirrors with two sets of voice coil motors. One set of the voice coil motors may be set up to shift the projected image of the digital micro display device 112b in a first axial direction (for example, up and down along a vertical axis). Another set of the voice coil motors may be set up to shift the projection image of the digital micro display device 112b in a second axial direction (for example, left and right along a horizontal axis). The disclosure is not limited thereto, and the two sets of the voice coil motors are not limited to move along the vertical and horizontal axes, but may also move along other distinct axial directions, for example, along +45 degrees and -45 degrees. Further, the movement is not limited to biaxial, and may also be uniaxial to shift the projection image in one axial direction. In an embodiment, the shifting device 115 also includes a set of voice coil motor for shifting the projected image of the digital micro display device 112b along a single axis. In an embodiment, the shifting device 115 includes multiple sets of voice coil motors that shift the projected image of the digital micro display device 112b along different axes.

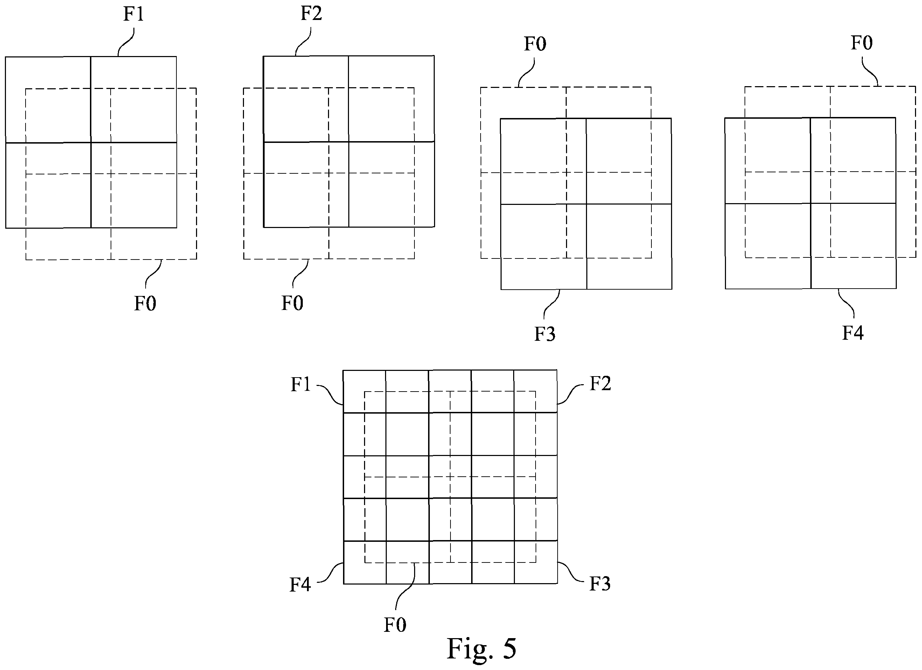

Referring to Figs. 3-5, Fig. 3 shows a clock signal TS2 for controlling the switching of the projection image 130 of the digital micro display device 112b and a clock signal TS1 for controlling the shifting direction of the shifting device 115. Fig. 5 shows an original image F0 being the original image of the first output video signal VO1. As shown in the Fig. 3, the programmable logic device 111b transmits two synchronized signals, clock signals TS1 and TS2, to the shifting device 115 and the digital micro display device 112b in the imaging device 112, respectively. In this way, the shifting device 115 and the digital micro display device 112b can together control the display of the image according to the synchronized signals, clock signals TS1 and TS2. When the image displayed by the digital micro display device 112b is switched between the first sub-image VO1a, the second sub-image VO1b, the third sub-image VO1c, and the fourth sub-image VO1d, the shifting device 115 can synchronously move the image projected by the digital micro display device 112b to the upper left, upper right, lower right, and lower left, as shown in Fig. 5.

For example, at the first time the programmable logic device 111b controls the shifting device 115 to bi-axially shift to an upper left position. The programmable logic device 111b transmits the clock signal TS1 to the shifting device 115 to drive the shifting device 115 to perform the above operation. The shifting device 115 may include two bi-axial voice coil motors, one of which shifts the projected image of the digital micro display device 112b to the left by 1/4 pixel width, and another one simultaneously shifts the projected image of the digital micro display device 112b upward by 1/4 pixel width. According to the driving of the clock signal TS2, the first sub-image VO1a is imaged on the digital micro display device 112b, and the light LS projected by the light source 112a causes a first position image F1 to form through the digital micro display device 112b. In this embodiment, the clock signal TS1 which controls the shifting device 115 and the clock signal TS2 which controls the digital micro display device 112b are synchronized with each other to drive the shifting device 115 and the digital micro display device 112b at the same time.

Next, at the second time, according to the clock signal TS1 transmitted by the programmable logic device 111b to the shifting device 115, the shifting device 115 is controlled to bi-axially shift to an upper right position. At this time, the digital micro display device 112b, which receives the clock signal TS2 synchronized with the clock signal TS1, changes the imaged content from the first sub-image VO1a to the second sub-image VO1b according to the clock signal TS2. The light LS projected by the light source 112a causes a second position image F2 to form through the digital micro display device 112b. By synchronization of the clock signals TS1 and TS2, the shifting of the shifting device 115 and the imaging content of the digital micro display device 112b are simultaneously actioned.

At the third time, according to the clock signal TS1 transmitted by the programmable logic device 111b to the shifting device 115, the shifting device 115 is controlled to bi-axially shift to a lower right position. At this time, the digital micro display device 112b, which receives the clock signal TS2 synchronized with the clock signal TS1, changes the imaged content from the second sub-image VO1b to the third sub-image VO1c according to the driving of the clock signal TS2. The light LS projected by the light source 112a causes the third position image F3 to form through the digital micro display device 112b.

At the fourth time, according to the clock signal TS1 transmitted by the programmable logic device 111b to the shifting device 115, the shifting device 115 is controlled to bi-axially shift to a lower left position. Similar to the above described operation, at this time, the light LS projected by the light source 112a causes a fourth position image F4 to form through the digital micro display device 112b.

The first position image F1, the second position image F2, the third position image F3 and the fourth position image F4 partially overlap with each other as shown in Fig. 5. The four images overlap to become a first output video image VF1 for displaying on a screen 300 through the lens 116. When the frequency of the shift as described above is greater than the time that human eyes can react, the displayed image is perceived as having a higher resolution than the original image F0.

Returning to Fig. 3, according to an example falling within the present invention, when the programmable logic device 111b receives the mode switching signal MSS having indications for setting the projection display apparatus 110 to the second operating mode 118, the shifting device 115 does not start the above described shifting process. The programmable logic device 111b accesses data for the image to be displayed by using the storage device 111d to obtain a second output video signal VO2 and to obtain a frame rate greater than the input video signal VI2. The second output video signal VO2 is imaged as the second output video image VF2 via the digital micro display device 112b for displaying on a screen 300 through the lens 116. Accordingly, the projection frame rate of the plurality of the second output video images VF2 is greater than the frame rate of the input video signal VI2. In an embodiment, the storage device 111d may be a frame buffer used to temporarily store the image data. Through reading and writing of the frame buffer, the images to be displayed are arranged for output to achieve a high frame rate projection display.

In other words, the first operating mode 117 is set to a high resolution mode, and the second operating mode 118 is set to a high frame rate mode.

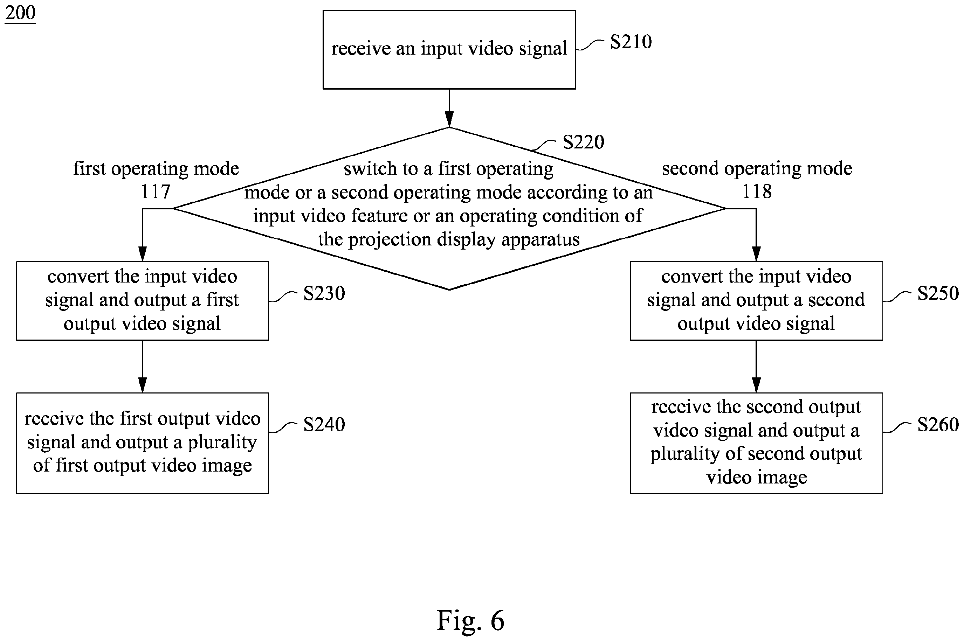

Figs. 6 to 12 show flow charts of control methods according to embodiments of the present invention. Referring to Fig. 6, for control method 200, at step S210, an input video signal is received, and step S220 determines to switch to the first operating mode 117 or the second operating mode 118 according to an input video feature or an operating condition of the projection display apparatus 110. If switching to the first operating mode 117, then the process goes to step S230. At step S230, an input video signal VI2 is converted and output as a first output video signal VO1. Next, at step S240, the first output video signal VO1 is received and a plurality of first output video images VF1 is output. If switching to the second operating mode 118, the process goes to step S250. At step S250, an input video signal VI2 is converted and output as a second output video signal VO2. Next, at step S260, the second output video signal VO2 is received and a plurality of second output video images VF2 is output. The first operating mode 117 may be set to a high resolution mode and the second operating mode 118 may be set to a high frame rate mode. Examples of determination method are described below.

Fig. 7 to Fig. 12 show steps S220a to S220f as different embodiments of the determination step S220 in Fig. 6.

Referring to the embodiment shown in Fig. 7, following step S210, step S221 determines if an automatic mode is enabled, and if yes, then proceed to step S222. At step S222, if the resolution of the input video is greater than the display resolution (first display resolution) of the imaging device 112 of the projection display apparatus 110 is determined, then the image to be viewed can be regarded as a high-resolution image. Since the projection display apparatus 110 would need to support an increased resolution, the process goes to step S223 to switch the projection display apparatus 110 to a first operating mode 117 (high resolution mode). If the resolution of the input video is not greater than the display resolution of the imaging device 112, then the process proceeds to step S228 which switches the projection display apparatus 110 to a second operating mode 118 (high frame rate mode). Referring back to the determination step S221, if the automatic mode is not on, then proceed to step S224 which determines if there is a manual signal indicating which operating mode to select. The presence of a manual control signal likely means that a user wants to assert a manual control. If there is no manual signal, the process proceeds to step S227 which the projection display apparatus 110 is switched to the first operating mode 117 or the second operating mode 118 according to the projection display apparatus' preset system setting. If there is a manual signal at step S224, then at step S225, the projection display apparatus 110 receives and processes the manual signal. At step S226, according to the received manual signal, a determination is made to switch to the first operating mode 117 (step S223) or to the second operating mode 118 (step S228).

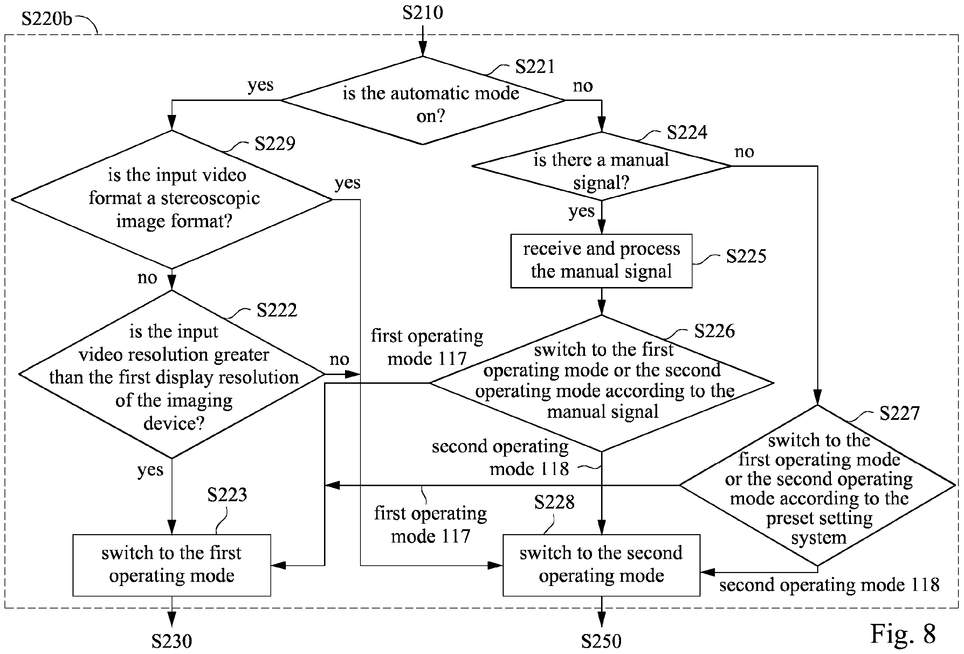

Referring to the embodiment shown in Fig. 8, step S221 determines if an automatic mode is enabled, and if yes, then proceed to step S229 to detect if the input video format is a stereoscopic image format according to an indication of the stereoscopic image information. In an embodiment, the stereoscopic image information includes an indication of input video format including left-eye image frames and right-eye image frames. Since an input video signal having stereoscopic image information will match with a corresponding stereoscopic glasses to enable a viewer's left and right eyes to sequentially receive images of a certain frequency (for example, 60 Hz for each of the left and right eyes images), this feature of the input video signal can be used to determine if the input video format is a stereoscopic image format. Viewing stereoscopic images has less need for displaying images in high resolution. Accordingly, if it is determined that the input video format is stereoscopic image format, the process proceeds to step S228 which switches the projection display apparatus 110 to the second operating mode 118. If the input video format is not in stereoscopic image format, the process proceeds to step S222 to determine if the resolution of the input video is greater than the first display resolution of the imaging device 112. This determination step and other manual mode steps are as same as the above described with reference to Fig. 7, and are not repeat herein.

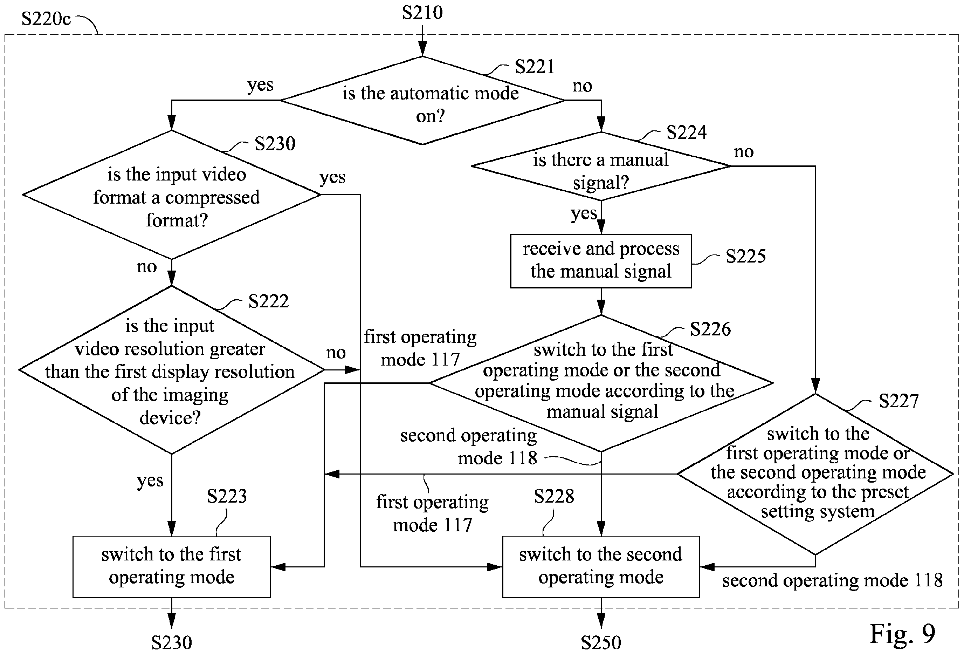

Referring to the embodiment shown in Fig. 9, step S221 determines if an automatic mode is enabled, and if yes, then proceed to step S230 to determine if the input video format is a compressed format. This determination can take into consideration one or more video compression rate parameter, such as compression ratio, compression type, and compression encryption. In general, the resolution of an image after compression is lower than its resolution before compression. Since a user that compresses an image usually utilizes it for the convenience of data transmission or convenience of use, it less likely that high image resolution is of concern. Accordingly, if the input video format is determined to be a compressed format, it is assumed that the first operating mode 117 (high resolution mode) is not applicable, and therefore the process proceeds to step S228 which switches the projection display apparatus 110 to the second operating mode 118. If the input video format is determined not to be a compressed format, the process proceeds to step S222 to determine if the resolution of the input video is greater than the first display resolution of the imaging device 112. This determination step and the other steps shown in the Fig. 9 are the same as previously described, and are not repeated herein.

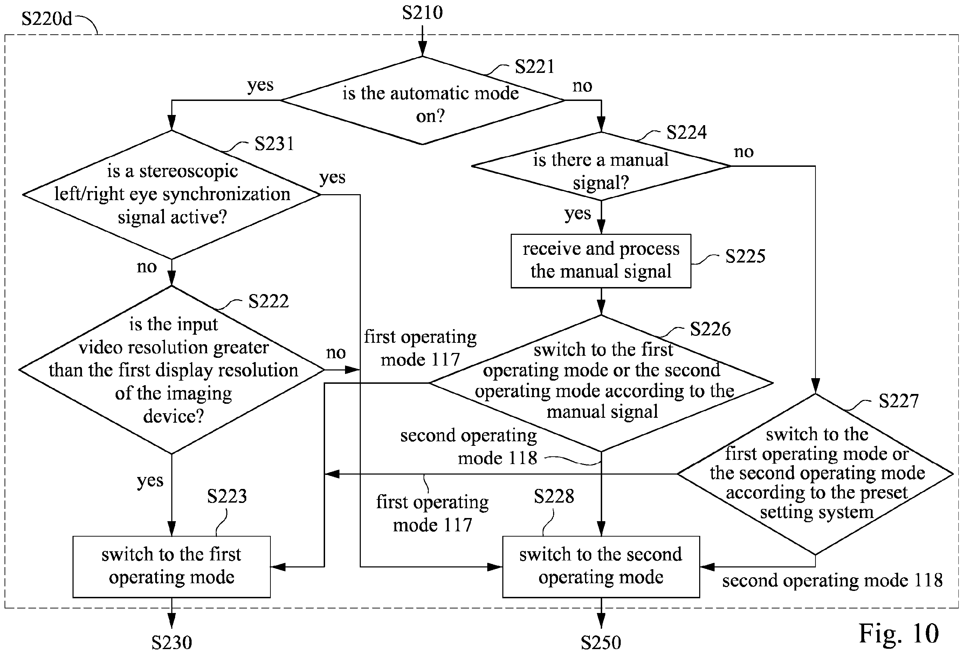

Referring to the embodiment shown in Fig. 10, step S221 determines if an automatic mode is enabled, and if yes, then proceed to step S231. When a user wears the stereoscopic glasses 120 for viewing images displayed by the projection display apparatus 110, the communication device 113 receives a wearing signal of the stereoscopic glasses 120 and transmits a stereoscopic left/right eye synchronization signal to the stereoscopic glasses 120. Step S231 detects if the stereoscopic left/right eye synchronization signal is active, and if yes, proceed to step S228. Similar to previously described determination step S230 of Fig. 8, if there is an indication that the stereoscopic image is to be viewed, so that it is assumed that the first operating mode 117 (high resolution mode) is not applicable, and the process proceed to S228 which switches the projection display apparatus 110 to the second operating mode 118. If it is determined that the stereoscopic left/right eye synchronization signal from the communication device 113 has been transmitted, the process proceed to step S222 to determine if the resolution of the input video is greater than the first display resolution of the imaging device 112. This determination step and the other steps shown in the Fig. 10 are the same as previously described, and are not repeated here.

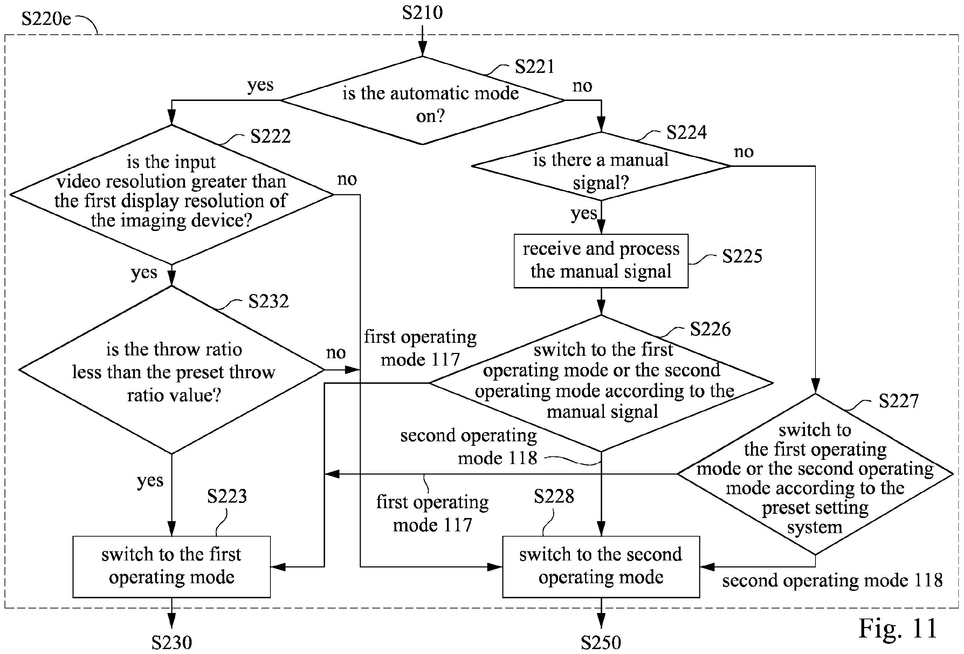

Referring to the embodiment shown in Fig. 11, step S221 determines if an automatic mode is enabled, and if yes, then proceed to step S222 to determine if the resolution of the input video is greater than the first display resolution of the imaging device 112. If the resolution of the input video is determined to be greater than the first display resolution of the imaging device 112, proceed to step S232 which determines if a throw ratio 119 of the projection display apparatus 110 is smaller than a preset throw ratio value. Throw ratio 119 is defined as a ratio (D/W), which is the distance (D) between the lens 116 and the screen 300, divided by the width (W) of the projection image 130. As previously described with reference to Fig. 1 and Fig. 2, the throw ratio 119 of the projection display apparatus 110 can be changed (e.g., by changing the lens 116, manually adjusted, or electrically adjusted). Accordingly, with different use of the projection display apparatus 110, its throw ratio 119 may be set differently compared to other uses. Comparatively, the preset throw ratio value of the projection display apparatus 110 is a fixed setting which when used for determination (further described herein), provides a threshold-type parameter for use to switch the operating modes of the projection display apparatus 110.

At step S232, if the throw ratio 119 is determined to be smaller than the preset throw ratio value, then proceed to step S223 to switch to the first operating mode 117. A small throw ratio may mean that the projection display apparatus 110 is using short focal length lens (for projecting a larger image over a relatively short distance). In this situation, a higher resolution may be desired, and therefore by switching the projection display apparatus 110 to the first operating mode 117 (high resolution mode), enhanced resolution images can be projected for viewing. Conversely, a larger throw ratio is likely to mean that high resolution is not required. Therefore, by comparing the projection display apparatus 110 throw ratio to a preset throw ratio value, a determination can be made as to which of the first operating mode 117 (high resolution mode) or the second operating mode 118 (high frame mode) is more suitable for use. For example, a setting could be made such that if the throw ratio 119 of the projection display apparatus 110 is not lower than the preset throw ratio value, step S228 proceeds to switch to the second operating mode 118. The other steps shown in the Fig. 11 are the same as previously described, and are not repeated herein.

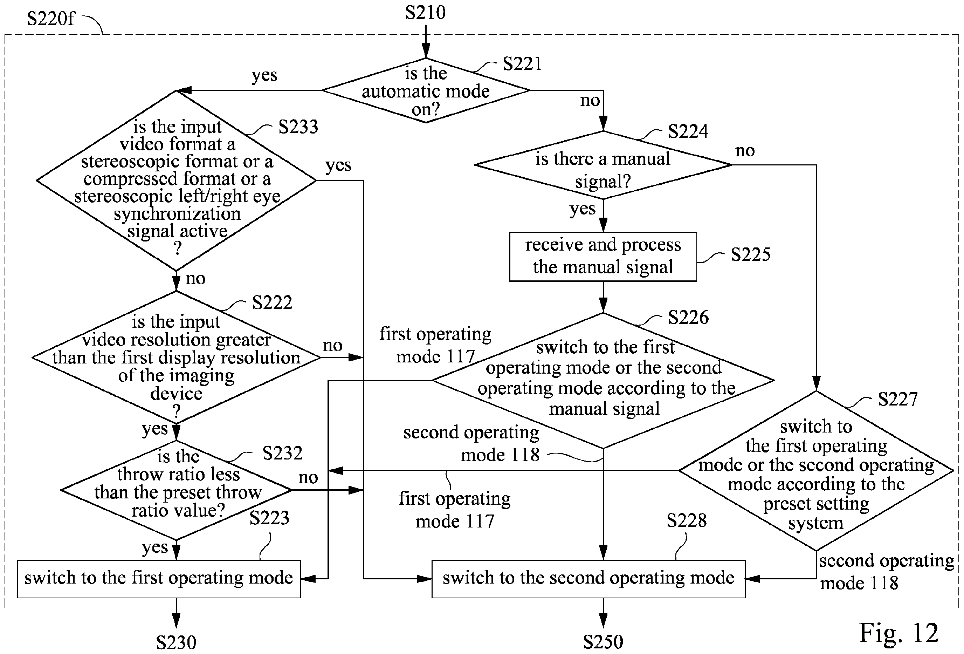

Referring to the embodiment shown in Fig. 12, step S221 determines if an automatic mode is enabled, and if yes, then proceed to step S233. At step S233, the input video feature and the operating condition previously described are assessed, including determining if the input video format is a stereoscopic image format or a compressed format, or if the stereoscopic glasses 120 has been worn (e.g. if the stereoscopic left/right eye synchronization signal is active). If any of these determinations is a "yes", then proceed to step S228 which switches the projection display apparatus 110 to the second operating mode 118. If all three determination results are "no", then proceed to step S222 to determine if the input video resolution is greater than the first display resolution of the imaging device 112. If the determination result is a "no", then proceed to step S228 to switch the projection display apparatus 110 to the second operating mode 118. If the determination result is a "yes", then proceed to step S232 to determine if the throw ratio 119 of the projection display apparatus 110 is smaller than a preset throw ratio value. If the determination result is a "yes" (i.e., the throw ratio 119 is smaller than the preset throw ratio value), then proceed to step S223 to switch the projection display apparatus 110 to the first operating mode 117. If determination result is a "no" (i.e., the throw ratio 119 is greater than the preset throw ratio value), then proceed to step S228 to switch the projection display apparatus 110 to the second operating mode 118. The other steps shown in the Fig. 12 are the same as previously described, and are not repeated herein.

The control method of the present invention that can be implemented is not limited to the above examples. The projection display apparatus 110 may determine to switch to the first operating mode 117 or the second operating mode 118 according to the input video feature or according to one or more operating conditions. Other than initial apparatus settings, a user can also set/change the priority order of which the projection display apparatus 110 undertakes determination to the switch to the first operating mode 117 or the second operating mode 118, according to various input video features and operating conditions.

## Claims

1. A projection display apparatus (110) for displaying a projection image (130) onto a screen (300) and adapted to be operated in a high resolution mode (117) or a high frame rate mode (118) according to operating conditions of the projection display apparatus (110) or input video features of an input video signal (VI1) of the projection display apparatus (110), the projection display apparatus (110) comprising:
an imaging device (112) having a first display resolution;
a shifting device (115) coupled to the imaging device (112);
a processing circuit (111) configured to receive the input video signal (VI1) having an input video resolution as input video feature and an input video frame rate,
wherein, in the high resolution mode (117), the processing circuit (111) is configured to convert the input video signal (VI1) in a first output video signal (VDO1) including a plurality of sub-images (VO1a-VO1d), each having the first display resolution, and
wherein, in the high frame rate mode (118), the processing circuit (111) is configured to convert the input video signal (VI1) in a second output video signal (VDO2) having the input video resolution and having a greater frame rate than the input video frame rate;
an adjustable lens (116), wherein the operating conditions of the projection display apparatus (110) comprise the projection display apparatus (110) projecting an image according to a throw ratio (119) corresponding to the adjustable lens (116); and
a control circuit (114) coupled to the processing circuit (111) and configured to selectively switch the projection display apparatus (110) to the high resolution mode or the high frame rate mode according to said input video features or said operating conditions;
wherein, if the input video resolution is greater than the first display resolution, the control circuit (114) is configured to switch the projection display apparatus (110) to the high resolution mode,
wherein, if the input video resolution is equal to or smaller than the first display resolution, the control circuit (114) is configured to switch the projection display apparatus (110) to the high frame rate mode, and
wherein, if the throw ratio (119) is smaller than or equal to a preset throw ratio value, the control circuit (114) is further configured to switch the projection display apparatus (110) to the high resolution mode;
wherein, in the high resolution mode, the imaging device (112) is configured to
receive the first output video signal (VDO1) including the plurality of sub-images (VO1a-VO1d) and
output to the shifting device (115) a plurality of first output video images (VF1) corresponding to the plurality of sub-images (VO1a-VO1d), each first output video image (VF1) having the first display resolution,
wherein, in the high frame rate mode, the imaging device (112) is configured to
receive the second output video signal (VDO2) having the frame rate greater than the input video frame rate and
output to the shifting device (115) a plurality of second output video images (VF2) corresponding to the second output video signal (VDO2), each second output video image (VF2) having the first display resolution,
wherein in the high resolution mode, the shifting device (115) is configured to
shift the plurality of first output video images (VF1) such that the shifted plurality of first output video images (VF1) overlap to form the projection image (130) having a second display resolution greater than the first display resolution, and
wherein, in the high frame rate mode, the shifting device (115) is configured
not to engage such that the second output video images (VF2) are directly projected onto the screen (300) to form the projection image (130) having the first display resolution.

2. The projection display apparatus (110) of claim 1, wherein, in the high resolution mode, the shifting device (115) is configured to shift the plurality of first output video images (VF1) in a uniaxial or biaxial direction.

3. The projection display apparatus (110) according to any of the preceding claims, wherein said input video features of the input video signal (VI1) further comprise:
a stereoscopic image information comprising an indication of input video format including left-eye image frames and right-eye image frames, or
a compression indicator comprising a video compression rate parameter,
wherein the control circuit (114) is further configured to switch the projection display apparatus (110) to the high frame rate mode according to at least one of the stereoscopic image information and the compression indicator.

4. The projection display apparatus (110) according to any of the preceding claims, further comprising:
a communication device (113) configured to couple to a stereoscopic glasses (120);
wherein the operating conditions of the projection display apparatus (110) further comprise the communication device (113) configured to transmit a stereoscopic left/right eye synchronization signal to the stereoscopic glasses (120), and
wherein the control circuit (114) is further configured to switch the projection display apparatus (110) to the high frame rate mode if the stereoscopic left/right eye synchronization signal is active.

5. The projection display apparatus (110) according to any of the preceding claims, wherein the number of the plurality of sub-images (VO1a-VO1d) is four.

6. A method (200) for controlling a projection display apparatus (110), wherein the projection display apparatus (110) is adapted to display a projection image (130) onto a screen (300),
wherein the projection display apparatus (110) comprises an imaging device (112) having a first display resolution, a shifting device (115) coupled to the imaging device (112) and an adjustable lens (116),
wherein the projection display apparatus (110) is adapted to be operated in a high resolution mode (117) or a high frame rate mode (118) according to operating conditions of the projection display apparatus (110) or input video features of an input video signal (VI1) of the projection display apparatus (110), and
wherein the operating conditions of the projection display apparatus (110) comprise the projection display apparatus (110) projecting an image according to a throw ratio (119) corresponding to the adjustable lens (116),
the method (200) comprising:
receiving, by a processing circuit (111) in the projection display apparatus (110), the input video signal (VI1) having an input video resolution as an input video feature
and an input video frame rate;
selectively switching the projection display apparatus (110), by a control circuit (114), to the high resolution mode or the high frame rate mode according to said input video features or said operating conditions,
wherein, if the input video resolution is greater than the first display resolution, said step of selectively switching comprises switching the projection display apparatus (110), by a control circuit (114), to the high resolution mode,
wherein, if the input video resolution is equal to or smaller than the first display resolution, said step of selectively switching comprises switching the projection display apparatus (110), by the control circuit (114), to the high frame rate mode, and
wherein, if the throw ratio (119) is smaller than or equal to a preset throw ratio value, the control circuit (114) is further configured to switch the projection display apparatus (110) to the high resolution mode;
wherein if switched to the high resolution mode:
converting, by the processing circuit (111), the input video signal (VI1) in a first output video signal (VDO1) including a plurality of sub-images (VO1a-VO1d), each having a first display resolution;
receiving, by the imaging device (112), the first output video signal (VDO1) including the plurality of sub-images (VO1a-VO1d);
outputting to the shifting device (115), by the imaging device (112), a plurality of first output video images (VF1) corresponding to the plurality of sub-images (VO1a-VO1d), each first output video image (VF1) having a first display resolution; and
shifting, by the shifting device (115), the plurality of first output video images (VF1) such that the shifted plurality of first output video images (VF1) overlap to form the projection image (130) having a second display resolution greater than the first display resolution; and wherein, if switched to the high frame rate mode:
converting, by the processing circuit (111), the input video signal (VI1) in a second output video signal (VDO2) having the input video resolution and having a greater frame rate than the input video frame rate;
receiving, by the imaging device (112), the second output video signal (VDO2) having the frame rate greater than the input video frame rate; and
outputting to the shifting device (115), by the imaging device (112), a plurality of second output video images (VF2) corresponding to the second output video signal (VDO2), each second output video image (VF2) having the first display resolution, wherein the plurality of second output video images (VF2) is directly projected onto the screen (300) to form the projection image (130) having the first display resolution.

7. The method (200) of claim 6, wherein the operating conditions comprise an automatic mode and a manual control, the method (200) further comprising:
determining, by the processing circuit (111), if the automatic mode is enabled;
determining, by the processing circuit (111), if a manual control signal corresponding to the manual control is received; and
if the manual control signal is received, switching the projection display apparatus (110), by the control circuit (114), to the high resolution mode or the high frame rate mode according to the manual control signal, and
if the automatic mode is not enabled and the manual control signal is not received, switching the projection display apparatus (110), by the control circuit (114), to the high resolution mode or the high frame rate mode according to a preset system setting of the projection display apparatus (110).

8. The method (200) of claim 6 or 7, wherein the step of shifting the plurality of first output video images (VF1) comprises:
shifting the plurality of first output video images (VF1) in a uniaxial or biaxial direction.

9. The method (200) of any of claims 6 to 8 further comprising:
determining, by the processing circuit (111), if the input video feature comprises a stereoscopic image information, and if yes, switching the projection display apparatus (110), by the control circuit (114), to the high frame rate mode, wherein the stereoscopic image information comprises an indication of input video format including left-eye image frames and right-eye image frames.

10. The method (200) of any of claims 6 to 9 further comprising:
determining, by the processing circuit (111), if the input video feature comprises a compression indicator, and if yes, switching the projection display apparatus (110), by the control circuit (114), to the high frame rate mode, wherein the compression indicator comprises a video compression rate parameter.

11. The method (200) of any of claims 6 to 10, wherein the number of the plurality of sub-images (VO1a-VO1d) is four.

## Patentansprüche

1. Projektionsanzeigevorrichtung (110) zum Anzeigen eines Projektionsbildes (130) auf einem Bildschirm (300) und ausgelegt, um in einem Hochauflösungsmodus (117) oder einem Hochbildratenmodus (118) gemäß Betriebsbedingungen der Projektionsanzeigevorrichtung (110) oder Eingangsvideomerkmalen eines Eingangsvideosignals (VI1) der Projektionsanzeigevorrichtung (110) betrieben zu werden, wobei die Projektionsanzeigevorrichtung (110) umfasst:
eine Abbildungseinrichtung (112) mit einer ersten Anzeigeauflösung;
eine Verschiebeeinrichtung (115), die mit der Abbildungseinrichtung (112) gekoppelt ist;
eine Verarbeitungsschaltung (111), die konfiguriert ist, um das Eingangsvideosignal (VI1) mit einer Eingangsvideoauflösung als Eingangsvideomerkmal und einer Eingangsvideobildrate zu empfangen,
wobei die Verarbeitungsschaltung (111) in dem Hochauflösungsmodus (117) konfiguriert ist, um das Eingangsvideosignal (VI1) in ein erstes Ausgangsvideosignal (VDO1) umzuwandeln, das eine Vielzahl von Teilbildern (VO1a-VO1d) einschließt, die jeweils die erste Anzeigeauflösung aufweisen, und
wobei die Verarbeitungsschaltung (111) in dem Hochbildratenmodus (118) konfiguriert ist, um das Eingangsvideosignal (VI1) in ein zweites Ausgangsvideosignal (VDO2) umzuwandeln, das die Eingangsvideoauflösung aufweist und eine größere Bildrate als die Eingangsvideobildrate aufweist;
ein einstellbares Objektiv (116), wobei die Betriebsbedingungen der Projektionsanzeigevorrichtung (110) umfassen, dass die Projektionsanzeigevorrichtung (110) ein Bild gemäß einem Throw-Verhältnis (119) projiziert, das dem einstellbaren Objektiv (116) entspricht; und
eine Steuerschaltung (114), die mit der Verarbeitungsschaltung (111) gekoppelt und dazu konfiguriert ist, die Projektionsanzeigevorrichtung (110) gemäß den Eingangsvideomerkmalen oder den Betriebsbedingungen selektiv auf den Hochauflösungsmodus oder den Hochbildratenmodus umzuschalten;
wobei, wenn die Eingangsvideoauflösung größer als die erste Anzeigeauflösung ist, die Steuerschaltung (114) konfiguriert ist, um die Projektionsanzeigevorrichtung (110) auf den Hochauflösungsmodus umzuschalten,
wobei, wenn die Eingangsvideoauflösung gleich oder kleiner als die erste Anzeigeauflösung ist, die Steuerschaltung (114) konfiguriert ist, um die Projektionsanzeigevorrichtung (110) auf den Hochbildratenmodus umzuschalten, und
wobei, wenn das Throw-Verhältnis (119) kleiner oder gleich einem voreingestellten Throw-Verhältniswert ist, die Steuerschaltung (114) ferner dazu konfiguriert ist, die Projektionsanzeigevorrichtung (110) auf den Hochauflösungsmodus umzuschalten;
wobei die Abbildungseinrichtung (112) in dem Hochauflösungsmodus konfiguriert ist, um das erste Ausgangsvideosignal (VDO1) zu empfangen, das die Vielzahl von Teilbildern (VO1a-VO1d) einschließt, und
um eine Vielzahl von ersten Ausgabevideobildern (VF1), die der Vielzahl von Teilbildern (VO1a-VO1d) entsprechen, an die Verschiebeeinrichtung (115) auszugeben, wobei jedes erste Ausgabevideobild (VF1) die erste Anzeigeauflösung aufweist,
wobei die Abbildungseinrichtung (112) in dem Hochbildratenmodus konfiguriert ist, um
das zweite Ausgangsvideosignal (VDO2) zu empfangen, das eine Bildrate aufweist, die größer als die Eingangsvideobildrate ist, und
um eine Vielzahl von zweiten Ausgangsvideobildern (VF2), die dem zweiten Ausgangsvideosignal (VDO2) entsprechen, an die Verschiebeeinrichtung (115) auszugeben, wobei jedes zweite Ausgangsvideobild (VF2) die erste Anzeigeauflösung aufweist,
wobei die Verschiebeeinrichtung (115) in dem Hochauflösungsmodus konfiguriert ist, um
die Vielzahl von ersten Ausgabevideobildern (VF1) so zu verschieben, dass sich die verschobene Vielzahl von ersten Ausgabevideobildern (VF1) überlappen, um das Projektionsbild (130) mit einer zweiten Anzeigeauflösung zu bilden, die größer als die erste Anzeigeauflösung ist, und
wobei die Verschiebeeinrichtung (115) in dem Hochbildratenmodus dazu konfiguriert ist, nicht einzugreifen, sodass die zweiten Ausgabevideobilder (VF2) direkt auf den Bildschirm (300) projiziert werden, um das Projektionsbild (130) mit der ersten Anzeigeauflösung zu bilden.

2. Projektionsanzeigevorrichtung (110) nach Anspruch 1, wobei die Verschiebeeinrichtung (115) in dem Hochauflösungsmodus konfiguriert ist, um die Vielzahl von ersten Ausgangsvideobildern (VF1) in einer einachsigen oder zweiachsigen Richtung zu verschieben.

3. Projektionsanzeigevorrichtung (110) nach einem der vorhergehenden Ansprüche, wobei die Eingangsvideomerkmale des Eingangsvideosignals (VI1) ferner Folgendes umfassen:
stereoskopische Bildinformationen, die eine Angabe eines Eingangsvideoformats umfassen, das Bildrahmen für das linke Auge und Bildrahmen für das rechte Auge umfasst, oder
einen Kompressionsindikator, der einen Videokompressionsratenparameter umfasst,
wobei die Steuerschaltung (114) ferner dazu konfiguriert ist, die Projektionsanzeigevorrichtung (110) gemäß mindestens einer der stereoskopischen Bildinformationen und des Kompressionsindikators auf den Hochbildratenmodus umzuschalten.

4. Projektionsanzeigevorrichtung (110) nach einem der vorhergehenden Ansprüche, ferner umfassend:
eine Kommunikationseinrichtung (113), die dazu konfiguriert ist, mit einer stereoskopischen Brille (120) gekoppelt zu werden;
wobei die Betriebsbedingungen der Projektionsanzeigevorrichtung (110) ferner die Kommunikationseinrichtung (113) umfassen, die konfiguriert ist, um ein stereoskopisches Synchronisationssignal für das linke/rechte Auge an die stereoskopische Brille (120) zu übertragen, und
wobei die Steuerschaltung (114) ferner dazu konfiguriert ist, die Projektionsanzeigevorrichtung (110) auf den Hochbildratenmodus umzuschalten, wenn das stereoskopische Synchronisationssignal für das linke/rechte Auge aktiv ist.

5. Projektionsanzeigevorrichtung (110) nach einem der vorhergehenden Ansprüche, wobei die Anzahl der Vielzahl von Teilbildern (VO1a-VO1d) vier beträgt.

6. Verfahren (200) zur Steuerung einer Projektionsanzeigevorrichtung (110), wobei die Projektionsanzeigevorrichtung (110) ausgelegt ist, um ein Projektionsbild (130) auf einem Bildschirm (300) anzuzeigen,
wobei die Projektionsanzeigevorrichtung (110) eine Abbildungseinrichtung (112) mit einer ersten Anzeigeauflösung, eine Verschiebeeinrichtung (115), die mit der Abbildungseinrichtung (112) gekoppelt ist, und ein einstellbares Objektiv (116) umfasst,
wobei die Projektionsanzeigevorrichtung (110) ausgelegt ist, um gemäß Betriebsbedingungen der Projektionsanzeigevorrichtung (110) oder Eingangsvideomerkmalen eines Eingangsvideosignals (VI1) der Projektionsanzeigevorrichtung (110) in einem Hochauflösungsmodus (117) oder einem Hochbildratenmodus (118) betrieben zu werden, und
wobei die Betriebsbedingungen der Projektionsanzeigevorrichtung (110) umfassen, dass die Projektionsanzeigevorrichtung (110) ein Bild gemäß einem Throw-Verhältnis (119) projiziert, das dem einstellbaren Objektiv (116) entspricht,
wobei das Verfahren (200) Folgendes umfasst:
Empfangen, durch eine Verarbeitungsschaltung (111) in der Projektionsanzeigevorrichtung (110), des Eingangsvideosignals (VI1) mit einer Eingangsvideoauflösung als ein Eingangsvideomerkmal und einer Eingangsvideobildrate;
selektives Umschalten der Projektionsanzeigevorrichtung (110), durch eine Steuerschaltung (114), auf den Hochauflösungsmodus oder den Hochbildratenmodus gemäß den Eingangsvideomerkmalen oder den Betriebsbedingungen,
wobei, wenn die Eingangsvideoauflösung größer als die erste Anzeigeauflösung ist, der Schritt des selektiven Umschaltens das Umschalten der Projektionsanzeigevorrichtung (110), durch eine Steuerschaltung (114), auf den Hochauflösungsmodus umfasst,
wobei, wenn die Eingangsvideoauflösung gleich oder kleiner als die erste Anzeigeauflösung ist, der Schritt des selektiven Umschaltens das Umschalten der Projektionsanzeigevorrichtung (110), durch die Steuerschaltung (114), auf den Hochbildratenmodus umfasst, und
wobei, wenn das Throw-Verhältnis (119) kleiner oder gleich einem voreingestellten Throw-Verhältniswert ist, die Steuerschaltung (114) ferner dazu konfiguriert ist, die Projektionsanzeigevorrichtung (110) auf den Hochauflösungsmodus umzuschalten;
wobei, wenn auf den Hochauflösungsmodus umgeschaltet:
Umwandeln des Eingangsvideosignals (VI1), durch die Verarbeitungsschaltung (111), auf ein erstes Ausgangsvideosignal (VDO1), das eine Vielzahl von Teilbildern (VO1a-VO1d) einschließt, die jeweils eine erste Anzeigeauflösung aufweisen;
Empfangen, durch die Abbildungseinrichtung (112), des ersten Ausgangsvideosignals (VDO1), das die Vielzahl von Teilbildern (VO1a-VO1d) einschließt;
Ausgeben einer Vielzahl von ersten Ausgabevideobildern (VF1), die der Vielzahl von Teilbildern (VO1a-VO1d) entsprechen, an die Verschiebeeinrichtung (115), durch die Abbildungseinrichtung (112), wobei jedes erste Ausgabevideobild (VF1) eine erste Anzeigeauflösung aufweist; und
Verschieben der Vielzahl von ersten Ausgabevideobildern (VF1), durch die Verschiebeeinrichtung (115), sodass sich die verschobene Vielzahl von ersten Ausgabevideobildern (VF1) überlappen, um das Projektionsbild (130) mit einer zweiten Anzeigeauflösung zu bilden, die größer als die erste Anzeigeauflösung ist; und wobei, wenn auf den Hochbildratenmodus umgeschaltet wird:
Umwandeln des Eingangsvideosignals (VI1), durch die Verarbeitungsschaltung (111), auf ein zweites Ausgangsvideosignal (VDO2),
das die Eingangsvideoauflösung aufweist und eine größere Bildrate als die Eingangsvideobildrate aufweist;
Empfangen, durch die Abbildungseinrichtung (112), des zweiten Ausgangsvideosignals (VDO2), das eine Bildrate aufweist, die größer als die Eingangsvideobildrate ist; und
Ausgeben einer Vielzahl von zweiten Ausgabevideobildern (VF2), die dem zweiten Ausgabevideosignal (VDO2) entsprechen, an die Verschiebeeinrichtung (115), durch die Abbildungseinrichtung (112), wobei jedes zweite Ausgabevideobild (VF2) die erste Anzeigeauflösung aufweist,
wobei die Vielzahl von zweiten Ausgabevideobildern (VF2) direkt auf den Bildschirm (300) projiziert wird, um das Projektionsbild (130) mit der ersten Anzeigeauflösung zu bilden.

7. Verfahren (200) nach Anspruch 6, wobei die Betriebsbedingungen einen Automatikmodus und eine manuelle Steuerung umfassen, wobei das Verfahren (200) ferner Folgendes umfasst:
Bestimmen, durch die Verarbeitungsschaltung (111), ob der Automatikmodus aktiviert ist;
Bestimmen, durch die Verarbeitungsschaltung (111), ob ein manuelles Steuersignal, das der manuellen Steuerung entspricht, empfangen wird; und
wenn das manuelle Steuersignal empfangen wird, Umschalten der Projektionsanzeigevorrichtung (110), durch die Steuerschaltung (114), auf den Hochauflösungsmodus oder den Hochbildratenmodus gemäß dem manuellen Steuersignal, und
wenn der Automatikmodus nicht aktiviert ist und das manuelle Steuersignal nicht empfangen wird, Umschalten der Projektionsanzeigevorrichtung (110), durch die Steuerschaltung (114), auf den Hochauflösungsmodus oder den Hochbildratenmodus gemäß einer voreingestellten Systemeinstellung der Projektionsanzeigevorrichtung (110).

8. Verfahren (200) nach Anspruch 6 oder 7, wobei der Schritt des Verschiebens der Vielzahl von ersten Ausgabevideobildern (VF1) Folgendes umfasst:
Verschieben der Vielzahl von ersten Ausgabevideobildern (VF1) in eine einachsige oder zweiachsige Richtung.

9. Verfahren (200) nach einem der Ansprüche 6 bis 8, ferner umfassend:
Bestimmen, durch die Verarbeitungsschaltung (111), ob das Eingangsvideomerkmal stereoskopische Bildinformationen umfasst, und wenn ja, Umschalten der Projektionsanzeigevorrichtung (110), durch die Steuerschaltung (114), auf den Hochbildratenmodus, wobei die stereoskopischen Bildinformationen eine Angabe eines Eingangsvideoformats umfasst, das Bildrahmen für das linke Auge und Bildrahmen für das rechte Auge einschließt.

10. Verfahren (200) nach einem der Ansprüche 6 bis 9, ferner umfassend:
Bestimmen, durch die Verarbeitungsschaltung (111), ob das Eingangsvideomerkmal einen Kompressionsindikator umfasst, und wenn ja, Umschalten der Projektionsanzeigevorrichtung (110), durch die Steuerschaltung (114), auf den Hochbildratenmodus, wobei der Kompressionsindikator einen Videokompressionsratenparameter umfasst.

11. Verfahren (200) nach einem der Ansprüche 6 bis 10, wobei die Anzahl der Vielzahl von Teilbildern (VO1a-VO1d) vier beträgt.

## Revendications

1. Appareil d'affichage par projection (110) pour afficher une image de projection (130) sur un écran (300) et adapté pour fonctionner dans un mode haute résolution (117) ou un mode de fréquence d'images élevée (118) en fonction des conditions de fonctionnement de l'appareil d'affichage par projection (110) ou de caractéristiques vidéo d'entrée d'un signal vidéo d'entrée (VI1) de l'appareil d'affichage par projection (110), l'appareil d'affichage par projection (110) comprenant :
un dispositif d'imagerie (112) ayant une première résolution d'affichage ;
un dispositif de décalage (115) couplé au dispositif d'imagerie (112) ;
un circuit de traitement (111) configuré pour recevoir le signal vidéo d'entrée (VI1) ayant une résolution vidéo d'entrée comme caractéristique vidéo d'entrée et une fréquence d'images vidéo d'entrée,
dans lequel, dans le mode haute résolution (117), le circuit de traitement (111) est configuré pour convertir le signal vidéo d'entrée (VI1) en un premier signal vidéo de sortie (VDO1) comprenant une pluralité de sous-images (VO1a-VO1d), chacune ayant la première résolution d'affichage, et
dans lequel, dans le mode de fréquence d'images élevée (118), le circuit de traitement (111) est configuré pour convertir le signal vidéo d'entrée (VI1) en un second signal vidéo de sortie (VDO2) ayant la résolution vidéo d'entrée et une fréquence d'images supérieure à la fréquence d'images vidéo d'entrée ;
une lentille réglable (116), dans lequel les conditions de fonctionnement de l'appareil d'affichage par projection (110) comprennent la projection par l'appareil d'affichage par projection (110) d'une image selon un rapport de projection (119) correspondant à la lentille réglable (116) ; et
un circuit de commande (114) couplé au circuit de traitement (111) et configuré pour commuter sélectivement l'appareil d'affichage par projection (110) sur le mode haute résolution ou sur le mode de fréquence d'images élevée en fonction desdites caractéristiques vidéo d'entrée ou desdites conditions de fonctionnement ;
dans lequel, si la résolution vidéo d'entrée est supérieure à la première résolution d'affichage, le circuit de commande (114) est configuré pour commuter l'appareil d'affichage par projection (110) sur le mode haute résolution,
dans lequel, si la résolution vidéo d'entrée est égale ou inférieure à la première résolution d'affichage, le circuit de commande (114) est configuré pour commuter l'appareil d'affichage par projection (110) sur le mode de fréquence d'images élevée, et
dans lequel, si le rapport de projection (119) est inférieur ou égal à une valeur de rapport de projection prédéfinie, le circuit de commande (114) est en outre configuré pour commuter l'appareil d'affichage par projection (110) sur le mode haute résolution ;
dans lequel, dans le mode haute résolution, le dispositif d'imagerie (112) est configuré pour recevoir le premier signal vidéo de sortie (VDO1) comprenant la pluralité de sous-images (VO1a-VO1d) et
délivrer en sortie au dispositif de décalage (115) une pluralité de premières images vidéo de sortie (VF1) correspondant à la pluralité de sous-images (VO1a-VO1d), chaque première image vidéo de sortie (VF1) ayant la première résolution d'affichage,
dans lequel, dans le mode de fréquence d'images élevée, le dispositif d'imagerie (112) est configuré pour
recevoir le second signal vidéo de sortie (VDO2) ayant la fréquence d'images supérieure à la fréquence d'images vidéo d'entrée et
délivrer en sortie au dispositif de décalage (115) une pluralité de secondes images vidéo de sortie (VF2) correspondant au second signal vidéo de sortie (VDO2), chaque seconde image vidéo de sortie (VF2) ayant la première résolution d'affichage,
dans lequel, dans le mode haute résolution, le dispositif de décalage (115) est configuré pour
décaler la pluralité de premières images vidéo de sortie (VF1) de manière que la pluralité décalée de premières images vidéo de sortie (VF1) se chevauchent pour former l'image de projection (130) ayant une seconde résolution d'affichage supérieure à la première résolution d'affichage, et
dans lequel, dans le mode de fréquence d'images élevée, le dispositif de décalage (115) est configuré pour ne pas s'engager de manière que les secondes images vidéo de sortie (VF2) soient directement projetées sur l'écran (300) pour former l'image de projection (130) ayant la première résolution d'affichage.

2. Appareil d'affichage par projection (110) selon la revendication 1, dans lequel, dans le mode haute résolution, le dispositif de décalage (115) est configuré pour décaler la pluralité de premières images vidéo de sortie (VF1) dans une direction mono-axiale ou biaxiale.

3. Appareil d'affichage par projection (110) selon l'une quelconque des revendications précédentes, dans lequel lesdites caractéristiques vidéo d'entrée du signal vidéo d'entrée (VI1) comprennent en outre :
une information d'image stéréoscopique comprenant une indication d'un format vidéo d'entrée comportant des trames d'images d'oeil gauche et des trames d'images d'oeil droit, ou
un indicateur de compression comprenant un paramètre de taux de compression vidéo,
dans lequel le circuit de commande (114) est configuré en outre pour commuter l'appareil d'affichage par projection (110) sur le mode de fréquence d'images élevée en fonction d'au moins un parmi l'information d'image stéréoscopique et l'indicateur de compression.

4. Appareil d'affichage par projection (110) selon l'une quelconque des revendications précédentes, comprenant en outre :
un dispositif de communication (113) configuré pour se coupler à des lunettes stéréoscopiques (120) ;
dans lequel les conditions de fonctionnement de l'appareil d'affichage par projection (110) comprennent en outre le dispositif de communication (113) configuré pour transmettre un signal de synchronisation d'oeil gauche/droit stéréoscopique aux lunettes stéréoscopiques (120), et
dans lequel le circuit de commande (114) est configuré en loutre pour commuter l'appareil d'affichage par projection (110) sur le mode de fréquence d'images élevée si le signal de synchronisation d'oeil gauche/droit stéréoscopique est actif.

5. Appareil d'affichage par projection (110) selon l'une quelconque des revendications précédentes, dans lequel le nombre de la pluralité de sous-images (VO1a-VO1d) est quatre.

6. Procédé (200) de commande d'un appareil d'affichage par projection (110), dans lequel l'appareil d'affichage par projection (110) est adapté pour afficher une image de projection (130) sur un écran (300),
dans lequel l'appareil d'affichage par projection (110) comprend un dispositif d'imagerie (112) ayant une première résolution d'affichage, un dispositif de décalage (115) couplé au dispositif d'imagerie (112) et une lentille réglable (116),
dans lequel l'appareil d'affichage par projection (110) est adapté pour fonctionner dans un mode haute résolution (117) ou dans un mode de fréquence d'images élevée (118) en fonction de conditions de fonctionnement de l'appareil d'affichage par projection (110) ou de caractéristiques vidéo d'entrée d'un signal vidéo d'entrée (VI1) de l'appareil d'affichage par projection (110), et
dans lequel les conditions de fonctionnement de l'appareil d'affichage par projection (110) comprennent la projection par l'appareil d'affichage par projection (110) d'une image selon un rapport de projection (119) correspondant à la lentille réglable (116),
le procédé (200) comprenant :
la réception, par un circuit de traitement (111) dans l'appareil d'affichage par projection (110), du signal vidéo d'entrée (VI1) ayant une résolution vidéo d'entrée comme une caractéristique vidéo d'entrée et une fréquence d'images vidéo d'entrée ;
la commutation sélective de l'appareil d'affichage par projection (110), par un circuit de commande (114), sur le mode haute résolution ou sur le mode de fréquence d'images élevée en fonction desdites caractéristiques vidéo d'entrée ou desdites conditions de fonctionnement,
dans lequel, si la résolution vidéo d'entrée est supérieure à la première résolution d'affichage, ladite étape de commutation sélective comprend la commutation de l'appareil d'affichage par projection (110), par un circuit de commande (114), sur le mode haute résolution,
dans lequel, si la résolution vidéo d'entrée est égale ou inférieure à la première résolution d'affichage, ladite étape de commutation sélective comprend la commutation de l'appareil d'affichage par projection (110), par le circuit de commande (114), sur le mode de fréquence d'images élevée, et
dans lequel, si le rapport de projection (119) est inférieur ou égal à une valeur de rapport de projection prédéfinie, le circuit de commande (114) est en outre configuré pour commuter l'appareil d'affichage par projection (110) sur le mode haute résolution ;
dans lequel, s'il est commuté sur le mode haute résolution :
la conversion, par le circuit de traitement (111), du signal vidéo d'entrée (VI1) en un premier signal vidéo de sortie (VDO1) comprenant une pluralité de sous-images (VO1a-VO1d), chacune ayant une première résolution d'affichage ;
la réception, par le dispositif d'imagerie (112), du premier signal vidéo de sortie (VDO1) comprenant la pluralité de sous-images (VO1a-VO1d) ;
la délivrance en sortie au dispositif de décalage (115), par le dispositif d'imagerie (112), d'une pluralité de premières images vidéo de sortie (VF1) correspondant à la pluralité de sous-images (VO1a-VO1d), chaque première image vidéo de sortie (VF1) ayant une première résolution d'affichage ; et
le décalage, par le dispositif de décalage (115), de la pluralité de premières images vidéo de sortie (VF1) de manière que la pluralité décalée de premières images vidéo de sortie (VF1) se chevauchent pour former l'image de projection (130) ayant une seconde résolution d'affichage supérieure à la première résolution d'affichage ; et dans lequel, s'il est commuté sur le mode de fréquence d'images élevée :
la conversion, par le circuit de traitement (111), du signal vidéo d'entrée (VI1) en un second signal vidéo de sortie (VDO2) ayant la résolution vidéo d'entrée et ayant une fréquence d'images supérieure à la fréquence d'images vidéo d'entrée ;
la réception, par le dispositif d'imagerie (112), du second signal vidéo de sortie (VDO2) ayant la fréquence d'images supérieure à la fréquence d'images vidéo d'entrée ; et
la délivrance en sortie au dispositif de décalage (115), par le dispositif d'imagerie (112), d'une pluralité de secondes images vidéo de sortie (VF2) correspondant au second signal vidéo de sortie (VDO2), chaque seconde image vidéo de sortie (VF2) ayant la première résolution d'affichage, dans lequel la pluralité de secondes images vidéo de sortie (VF2) est directement projetée sur l'écran (300) pour former l'image de projection (130) ayant la première résolution d'affichage.

7. Procédé (200) selon la revendication 6, dans lequel les conditions de fonctionnement comprennent un mode automatique et une commande manuelle, le procédé (200) comprenant en outre :
la détermination, par le circuit de traitement (111), si le mode automatique est activé ;
la détermination, par le circuit de traitement (111), si un signal de commande manuelle correspondant à la commande manuelle est reçu ; et
si le signal de commande manuelle est reçu, la commutation de l'appareil d'affichage par projection (110), par le circuit de commande (114), sur le mode haute résolution ou le mode de fréquence d'images élevée en fonction du signal de commande manuelle, et
si le mode automatique n'est pas activé et le signal de commande manuelle n'est pas reçu, la commutation de l'appareil d'affichage par projection (110), par le circuit de commande (114), sur le mode haute résolution ou le mode de fréquence d'images élevée en fonction d'un paramétrage de système prédéfini de l'appareil d'affichage par projection (110).

8. Procédé (200) selon la revendication 6 ou 7, dans lequel l'étape de décalage de la pluralité de premières images vidéo de sortie (VF1) comprend :
le décalage de la pluralité de premières images vidéo de sortie (VF1) dans une direction mono-axiale ou biaxiale.

9. Procédé (200) selon l'une quelconque des revendications 6 à 8, comprenant en outre :
la détermination, par le circuit de traitement (111), si la caractéristique vidéo d'entrée comprend une information d'image stéréoscopique et, dans l'affirmative, la commutation de l'appareil d'affichage par projection (110), par le circuit de commande (114), sur le mode de fréquence d'images élevée, dans lequel l'information d'image stéréoscopique comprend une indication d'un format vidéo d'entrée comprenant des trames d'images d'oeil gauche et des trames d'images d'oeil droit.

10. Procédé (200) selon l'une quelconque des revendications 6 à 9, comprenant en outre :
la détermination, par le circuit de traitement (111), si l'élément vidéo d'entrée comprend un indicateur de compression et, dans l'affirmative, la commutation de l'appareil d'affichage par projection (110), par le circuit de commande (114), sur le mode de fréquence d'images élevée, dans lequel l'indicateur de compression comprend un paramètre de taux de compression vidéo.

11. Procédé (200) selon l'une quelconque des revendications 6 à 10, dans lequel le nombre de la pluralité de sous-images (VO1a-VO1d) est quatre.
